# DEMANDE DE BREVET EUROPEEN

(11) **EP 2 537 671 A1**
(43) Date de publication de la demande: **26.12.2012**
(21) Numéro de dépôt: 11170681.8
(22) Date de dépôt: 21.06.2011
(51) Int. Cl.: B32B 7/02, B32B 7/12, B32B 3/18, B32B 21/08, B32B 27/06, B32B 27/30

(54) **Bloc pour realiser un objet industriel, ensemble issu d'un tel bloc et objet industriel usine dans un tel bloc ou dans un tel ensemble**

(71) Demandeur: Platre, David, 69150 Decines (FR); Leroo, Grégory Jean-Bernard, 7700 Mouscron (BE)
(72) Inventeur: Platre, David, 69150 DECINES CHARPIEU (FR)
(74) Mandataire: Chevalier, Renaud Philippe

(57) **Abrégé**

Ce bloc (1) présente une forme globalement parallélépipédique et il comprend plusieurs plaques superposées et collées. Des plaques primaires (11) sont formées à base de bois. Des plaques secondaires sont disposées entre deux plaques primaires (11). Le matériau d'une plaque secondaire (12) respective est distinct du matériau respectif de chaque plaque primaire (11), de sorte que la ou chaque plaque secondaire (12) a un aspect distinct de l'aspect respectif de chaque plaque primaire (11).

## Description

La présente invention concerne un bloc adapté pour être usiné de façon à réaliser un ou plusieurs objet(s) industriel(s). De plus, la présente invention concerne un ensemble adapté pour être usiné de façon à réaliser un ou plusieurs objet(s) industriel(s), l'ensemble étant formé de planches découpées dans un tel bloc. Par ailleurs, la présente invention concerne un objet industriel, tel qu'un composant de meuble, issu d'un usinage réalisé dans un tel bloc ou dans un tel ensemble.

La présente invention trouve notamment application dans le domaine de la fabrication de meubles industriels avec des composants polychromes, dans le domaine de la fabrication d'objets industriels d'aspect polychrome, par exemple des jouets ou des objets décoratifs.

Dans l'art antérieur, pour fabriquer un objet industriel d'aspect polychrome tel qu'un composant de meuble, par exemple un pied de lit, un longeron ou une traverse, il est connu de réaliser un objet en un unique matériau, bois massif, plastique ou composite, puis d'en peindre certaines parties, par exemple des bandes, avec des couleurs différentes.

Cependant, la peinture est relativement difficile à appliquer avec précision, ce qui rend coûteuse la fabrication industrielle d'un tel objet. D'ailleurs, pour un objet de forme complexe, certaines parties difficiles d'accès sont presque impossibles à peindre, ce qui limite les modèles d'objets réalisables. En outre, la peinture peut être polluante, elle n'a pas une tenue durable et elle finit par s'écailler et se détacher de l'objet, ce qui dégrade fortement l'aspect de l'objet industriel.

La présente invention vise notamment à résoudre, en tout ou partie, les problèmes mentionnés ci-avant.

A cet effet, l'invention a pour objet un bloc, adapté pour être usiné de façon à réaliser au moins un objet industriel, tel qu'un composant de meuble, le bloc présentant de préférence une forme globalement parallélépipédique, le bloc comprenant plusieurs plaques superposées suivant une direction de superposition et solidarisées par collage, au moins deux plaques dites primaires étant réalisées en des matériaux déterminés.

Le bloc se caractérise en ce qu"il comprend en outre au moins une plaque dite secondaire disposée entre deux plaques primaires, le matériau d'une plaque secondaire respective étant distinct du matériau respectif de chaque plaque primaire, de sorte que la ou chaque plaque secondaire a un aspect distinct de l'aspect respectif de chaque plaque primaire, au moins une plaque secondaire étant formée en un matériau sélectionné dans le groupe constitué d'un matériau plastique de synthèse, un métal, un matériau minéral tel qu'un marbre ou une ardoise, un cuir reconstitué et un matériau à base de cellulose compactée.

En d'autres termes, un bloc conforme à l'invention est formé d'une superposition de plaques en matériaux d'aspects différents.

Ainsi, un tel bloc peut former, sans usinage, un longeron ou une traverse pour un meuble avec des incrustations polychromes dans la masse. De plus, un tel bloc peut être usiné, par tournage, fraisage et/ou équivalent, pour former un objet industriel polychrome, notamment un objet industriel de forme complexe.

Selon un mode de réalisation, un bloc conforme à l'invention comprend plusieurs plaques secondaires et dans lequel chaque plaque secondaire présente une couleur distincte de la couleur respective de chaque plaque primaire.

Ainsi, des telles plaques secondaires permettent de réaliser un bloc conforme à l'invention qui est polychrome, par exemple bicolore, avec plusieurs « strates » de chaque couleur.

Selon un mode de réalisation, les plaques secondaires représentent entre 20% et 80% de la surface extérieure du bloc.

Ainsi, un bloc conforme à l'invention peut présenter un aspect global relativement équilibré entre ses différentes nuances.

Selon un mode de réalisation, les plaques primaires et les plaques secondaires sont superposées en alternance.

Ainsi, une telle alternance permet de conférer à un bloc conforme à l'invention un aspect zébré.

Selon un mode de réalisation, au moins deux plaques primaires sont formées à base de bois.

Ainsi, une telle plaque primaire et une telle plaque secondaire permettent de réaliser un bloc conforme à l'invention qui est bicolore et comprend du bois.

Selon un mode de réalisation, chaque plaque primaire et chaque plaque secondaire présente un état de surface adapté pour solidariser par collage ladite plaque primaire et ladite plaque secondaire, par exemple au moyen d'une colle à base de polyuréthane thermofusible, telle qu'une colle réactive sans solvant ou une colle bi-composants.

Ainsi, une telle solidarisation par collage permet d'usiner un objet industriel selon l'invention, par tournage, fraisage etc., en assurant la cohésion des plaques primaires et secondaires.

Selon un mode de réalisation, au moins une plaque secondaire est formée en un matériau translucide, de préférence en une résine thermodurcissable.

Ainsi, un tel matériau translucide permet de conférer à un bloc conforme à l'invention un aspect original, avec des régions laissant passer la lumière et d'autres régions opaques.

Selon un mode de réalisation, au moins une plaque primaire et/ou au moins une plaque secondaire est composée de planchettes aboutées.

Ainsi, de telles planchettes aboutées permettent de réaliser en bois dit recomposé un bloc conforme à l'invention, ce qui diminue le coût d'un tel bloc fabriqué de manière industrielle.

Selon un mode de réalisation, chacune desdites plaques primaires et secondaires a une dimension, dite épaisseur, qui est sensiblement inférieure aux deux autres dimensions, dites largeur et longueur, chaque plaque primaire ou secondaire ayant deux faces opposées globalement rectangulaires définies par la longueur et la largeur.

En d'autres termes, les plaques ont une section globalement rectangulaire. Ainsi, un bloc conforme à l'invention peut avoir globalement la forme d'un parallélépipède rectangle. Un tel bloc peut former, sans usinage, un longeron ou une traverse polychrome pour un meuble.

Selon un mode de réalisation, l'épaisseur de la ou de chaque plaque secondaire est comprise entre 30% et 200%, de préférence entre 80% et 120% de l'épaisseur moyenne des plaques primaires.

En d'autres termes, les plaques secondaires et les plaques primaires ont des épaisseurs sensiblement équivalentes. Ainsi, un bloc conforme à l'invention présente un aspect équilibré et une résistance mécanique appropriée.

Selon un mode de réalisation, au moins un conducteur électrique disposé entre deux desdites plaques primaires et secondaires et s'étendant entre deux extrémités du bloc, le conducteur électrique étant de préférence formé par un film recouvrant une face d'une plaque primaire ou secondaire.

Ainsi, un tel conducteur électrique peut conduire un courant au sein d'un bloc conforme à l'invention, ce qui permet d'alimenter des composants électriques logés dans ce bloc, par exemple des diodes électroluminescentes.

Selon une variante, le bloc a une longueur comprise entre 0,4 m et 4 m, une largeur comprise entre 0,1 m et 1,5 m et une hauteur comprise entre 0,2 m et 3 m, la hauteur correspondant au cumul des épaisseurs des plaques superposées.

Ainsi, de telles dimensions permettent de réaliser un bloc conforme à l'invention adapté aux machines d'usinage conventionnelles, pour une fabrication d'objets industriels.

Par ailleurs, la présente invention a pour objet un ensemble, adapté pour être usiné de façon à réaliser au moins un objet industriel, tel qu'un composant de meuble, l'ensemble présentant de préférence une forme globalement parallélépipédique, l'ensemble comprenant plusieurs planches superposées et solidarisées par collage, au moins deux planches dites primaires étant réalisées en des matériaux déterminés.

L'ensemble se caractérise en ce qu'il comprend en outre au moins une planche dite secondaire disposée entre deux planches primaires, au moins une planche secondaire étant issue d'une découpe dans un bloc selon l'invention et suivant un plan de coupe orienté de sorte que la planche secondaire comprend des tronçons de plusieurs desdites plaques primaires et secondaires superposées.

En d'autres termes, un tel ensemble est formé en débitant plusieurs planches polychromes dans un bloc selon l'invention, puis en superposant et en collant ces planches polychromes.

Ainsi, un tel bloc présente une mosaïque d'éléments de couleurs différentes et répartis dans la masse.

Selon un mode de réalisation, le bloc a des plaques primaires et secondaires globalement rectangulaires et le plan de coupe est parallèle à la direction de superposition. Cela permet de réaliser des plaques découpées qui sont constituées de plusieurs « lignes » de matériaux distincts.

De plus, la présente invention a pour objet un objet industriel tel qu'un composant de meuble, issu d'un usinage réalisé dans un bloc selon l'invention ou dans un ensemble selon l'invention.

Ainsi, un tel objet peut être réalisé suivant une fabrication industrielle et à coût modéré. Cet objet industriel peut être de forme complexe et polychrome, y compris dans certaines parties difficiles d'accès.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective éclatée d'un bloc conforme à un premier mode de réalisation de l'invention, à l'état désassemblé ;
- la figure 2 est une vue en perspective d'un bloc conforme à un premier mode de réalisation de l'invention, à l'état assemblé ;
- la figure 3 est une vue en perspective d'un objet industriel conforme à une première variante de l'invention et réalisé dans le bloc de la figure 1 ;
- la figure 4 est une vue similaire à la figure 1 et illustrant un objet industriel conforme à une deuxième variante de l'invention et réalisé à partie du bloc de la figure 1 ;
- la figure 5 est une vue similaire à la figure 1 et illustrant un bloc conforme à un deuxième mode de réalisation de l'invention, à l'état désassemblé ;
- la figure 6 est une vue similaire à la figure 3 et illustrant un objet industriel conforme à une troisième variante de l'invention et réalisé à partir du bloc de la figure 5 ;
- la figure 7 est une vue similaire à la figure 3 et illustrant un objet industriel conforme à une quatrième variante de l'invention et réalisé à partir du bloc de la figure 5 ;
- la figure 8 est une vue similaire à la figure 3 et illustrant un objet industriel conforme à une cinquième variante de l'invention et réalisé à partir du bloc de la figure 5 ;
- la figure 9 est une vue similaire à la figure 2 et illustrant un bloc conforme à un troisième mode de réalisation ;
- la figure 10 est une vue en perspective tronquée par le plan X à la figure 18 ;
- la figure 11 est une vue similaire à la figure 18 illustrant le bloc de la figure 9, équipé de composants électriques ;
- la figure 12 est une vue similaire à la figure 2 et illustrant un bloc conforme à un quatrième mode de réalisation de l'invention, à l'état assemblé ;
- la figure 13 est une vue en perspective d'un ensemble conforme à l'invention, à l'état désassemblé ;
- la figure 14 est une vue en perspective de l'ensemble de la figure 13, à l'état assemblé ;
- la figure 15 est une vue à plus grande échelle du détail XV à la figure 14 ;
- la figure 16 est une vue en perspective avec arraché partiel illustrant un objet industriel conforme à une sixième variante de l'invention et réalisé à partir de l'ensemble de la figure 14 ; et
- la figure 17 est une vue similaire à la figure 3 et illustrant un objet industriel conforme à une septième variante de l'invention et réalisé à partir de l'ensemble de la figure 14.

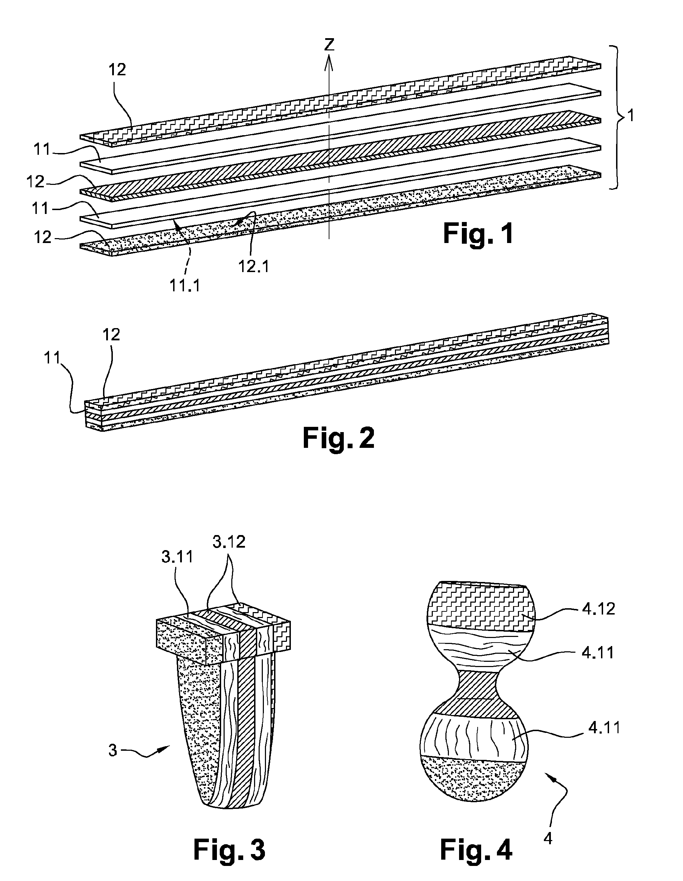

La figure 1 illustre un bloc 1 présentant une forme globalement parallélépipédique et comprenant deux plaques dites primaires 11 et trois plaques dites secondaires 12 disposées alternativement l'une au-dessus de l'autre. En d'autres termes, dans le bloc 1, chaque plaque secondaire 12 est disposée entre deux plaques primaires 11.

Les plaques primaires 11 et les plaques secondaires 12 sont qualifiées respectivement de « primaires » et « secondaires », car les plaques primaires 11 sont d'un premier type et les plaques secondaires 12 d'un deuxième type.

Les plaques primaires 11 sont formées à base de bois, ici de bois massif, par exemple en chêne. En pratique, les plaques primaires 11 peuvent être formées en tout matériau à base de bois, comme un matériau composite à fibres de bois.

Les plaques secondaires 12 sont formées en un matériau plastique de synthèse qui est translucide. Les plaques secondaires 12 sont formées en une résine thermodurcissable, par exemple en polyméthacrylate de méthyle (PMMA). En pratique, chaque plaque secondaire peut être formée en un matériau sélectionné dans le groupe constitué d'un matériau plastique de synthèse, un métal, un matériau minéral tel qu'un marbre ou une ardoise, un cuir reconstitué et un matériau à base de cellulose compactée.

Les matériaux respectifs des plaques primaires 11 et des plaques secondaires 12 sont sélectionnés de sorte que le bloc 1 est adapté pour être usiné de façon à réaliser au moins un objet industriel au moyen de machines d'usinage conventionnelles.

Le matériau d'une plaque secondaire respective 12 est distinct du matériau respectif de chaque plaque primaire 11 de telle sorte que la ou chaque plaque secondaire 12 a un aspect distinct de l'aspect respectif de chaque plaque primaire 11.

Dans l'exemple des figures 1 à 4, chaque plaque secondaire 12 présente une couleur spécifique qui est distincte de la couleur respective de chaque plaque primaire 11. Ainsi, les plaques primaires 11 sont en bois de couleur claire et les trois plaques secondaires 12 peuvent être respectivement de couleurs bleue, rouge et jaune.

L'épaisseur de chaque plaque primaire 11 ou secondaire 12 est sensiblement inférieure respectivement à sa largeur et sa longueur. Chaque plaque primaire 11 ou secondaire 12 a deux faces opposées globalement rectangulaires qui sont définies par la longueur et la largeur.

Comme le montre la figure 2, dans l'état assemblé du bloc 1, les plaques primaires 11 et les plaques secondaires 12 sont superposées, ici en alternance, et solidarisées entre elles par collage. Les plaques primaires 11 et les plaques secondaires 12 ont la même forme rectangulaire, si bien qu'elles sont superposées exactement.

Pour réaliser la superposition et le collage de chaque plaque primaire 11 sur une plaque secondaire 12, une face 11.1 d'une plaque primaire 11 et une face 12.1 correspondante d'une plaque secondaire 12 sont superposées après avoir été préparées et enduites de colle. Les plaques primaires 11 et les plaques secondaires 12 sont superposées suivant une direction de superposition Z.

La préparation des faces 11.1 et 12.1 permet que chaque plaque primaire 11 et chaque plaque secondaire 12 présente un état de surface adapté pour la solidarisation par collage. En pratique, on peut employer une colle à base de polyuréthane thermofusible, telle qu'une colle réactive sans solvant ou une colle bi-composants.

Dans le cas d'un polyméthacrylate de méthyle (PMMA), l'état de surface usuel présente un écart moyen arithmétique de rugosité Ra d'environ 0,06. La préparation comprend une étape consistant à travailler cet état de surface pour en augmenter l'écart moyen arithmétique de rugosité, par exemple à une valeur Ra comprise entre 1,2 et 1,8.

L'épaisseur de chaque plaque primaire 11 ou secondaire 12 s'étend suivant la direction de superposition Z. L'épaisseur de chaque plaque secondaire 12 est environ égale à l'épaisseur de chaque plaque primaire 11. En pratique, l'épaisseur de chaque plaque secondaire peut être comprise entre 30% et 200%, de préférence entre 80% et 120% de l'épaisseur moyenne des plaques primaires.

Comme les plaques primaires 11 et les plaques secondaires 12 sont d'épaisseurs équivalentes et comme les plaques primaires 11 et les plaques secondaires 12 sont alternées suivant la direction de superposition Z, les plaques secondaires 12 représentent environ 60% de la surface extérieure du bloc 1. En pratique, les plaques secondaires peuvent représenter entre 20% et 80% de la surface extérieure du bloc, ce qui rend un aspect visuel équilibré.

La figure 3 illustre un objet industriel 3 issu d'un usinage réalisé dans le bloc 1. L'objet industriel 3 remplit par exemple la fonction d'un pied de lit, donc un composant de meuble. L'objet industriel 3 présente un aspect particulier, en raison de couches distinctes 3.11 et 3.12 résultant de la superposition des plaques primaires 11 et des plaques secondaires 12 dans le bloc 1.

De même, la figure 4 illustre un objet industriel 4 issu d'un usinage réalisé dans le bloc 1. L'objet industriel 4 remplit par exemple la fonction d'un pied de meuble. L'objet industriel 4 présente un aspect particulier, en raison de couches distinctes 4.11 et 4.12 résultant de la superposition des plaques primaires 11 et des plaques secondaires 12 dans le bloc 1.

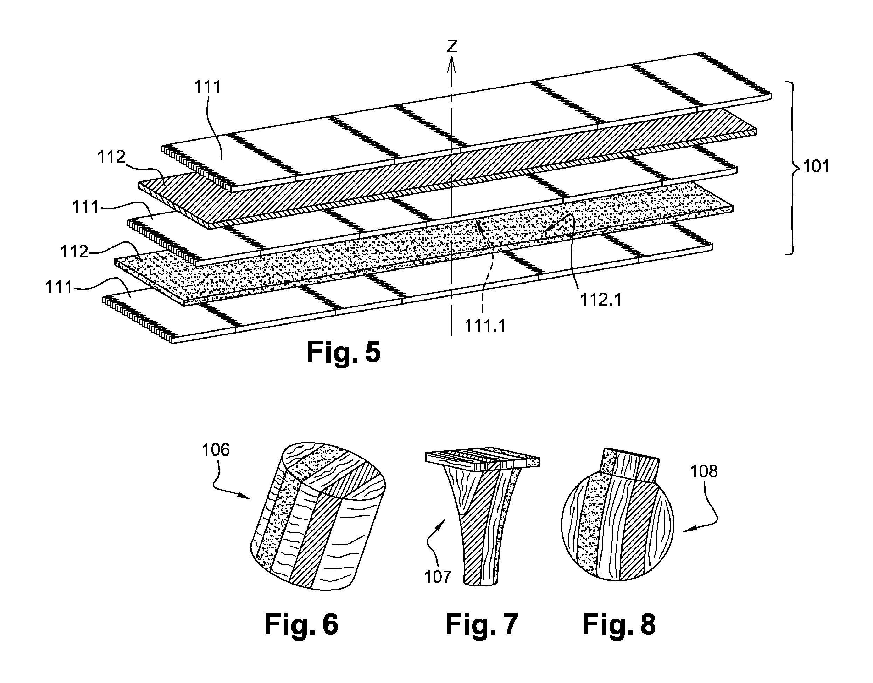

La figure 5 illustre un bloc 101 conforme à un deuxième mode de réalisation de l'invention et à l'état désassemblé. Dans la mesure où le bloc 101 est similaire au bloc 1, la description du bloc 1 donnée ci-avant en relation avec les figures 1 et 2 peut être transposée au bloc 101, à l'exception des différences notables énoncées ci-après.

Un élément du bloc 101 identique ou correspondant, par sa structure ou par sa fonction, à un élément du bloc 1 porte la même référence numérique augmentée de 100. On définit ainsi des plaques primaires 111 avec une face 111.1, des plaques secondaires 112 avec une face 112.1.

Le bloc 101 diffère du bloc 1, car les plaques primaires 111 sont composées de planchettes en bois massif aboutées deux à deux. En d'autres termes, les plaques primaires 111 sont en bois recomposé.

Les figures 6, 7 et 8 illustrent respectivement des objets industriels 106, 107 et 108 similaires aux objets industriels 3 et 4, mais les objets industriels 106, 107 et 108 sont issus d'un usinage réalisé dans le bloc 101.

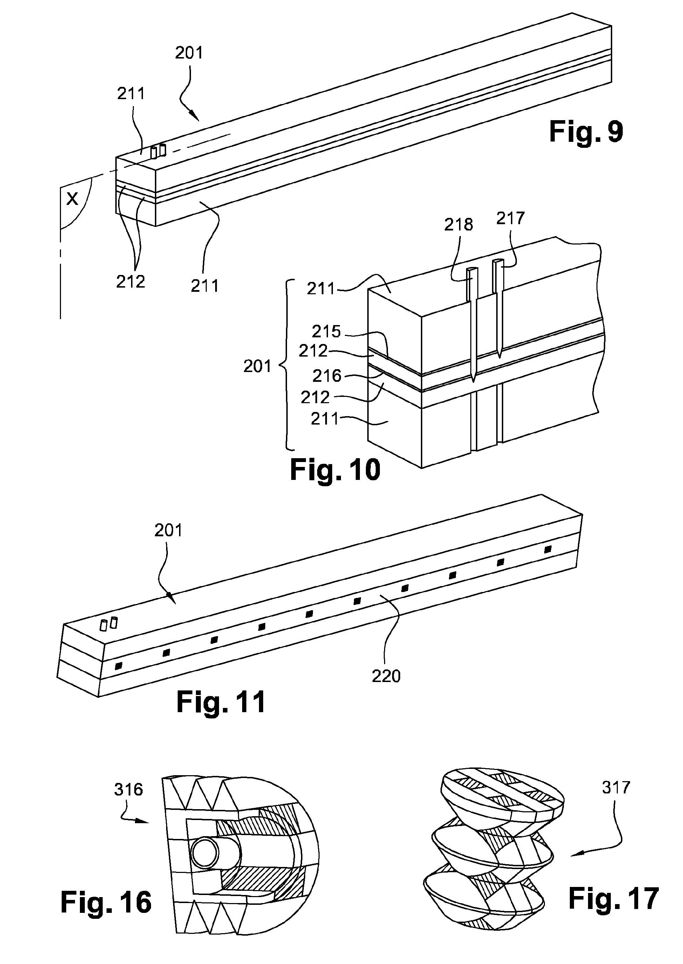

Les figures 9, 10 et 11 illustrent un bloc 201 conforme à un deuxième mode de réalisation de l'invention et à l'état assemblé. Dans la mesure où le bloc 201 est similaire au bloc 1, la description du bloc 1 donnée ci-avant en relation avec les figures 1 et 2 peut être transposée au bloc 201, à l'exception des différences notables énoncées ci-après.

Un élément du bloc 201 identique ou correspondant, par sa structure ou par sa fonction, à un élément du bloc 1 porte la même référence numérique augmentée de 200. On définit ainsi des plaques primaires 211 et des plaques secondaire 212.

Le bloc 201 diffère du bloc 1, car les plaques secondaires 212 sont superposées, sans interposition d'une plaque primaire 211.

Le bloc 201 diffère en outre du bloc 1, car il comprend deux films électriquement conducteurs 215 et 216 disposés entre une plaque primaire respective 211 et une plaque secondaire respective 212. Les films électriquement conducteurs 215 et 216 s'étendent entre les deux extrémités du bloc 201 et ils recouvrent une face d'une plaque secondaire respective 212.

De plus, le bloc 201 diffère du bloc 1, car il comprend deux fiches 217 et 218. La fiche 217 traverse une plaque primaire 211. La fiche 218 traverse une plaque primaire 211 et une plaque secondaire 212. Les fiches 217 et 218 établissent des contacts électriques respectivement avec les films électriquement conducteurs 215 et 216.

Le bloc 201 diffère aussi du bloc 1, car il comprend un groupe de diodes électroluminescentes 220 rapportées autour des plaques secondaires 212. Les fiches 217 et 218 peuvent recevoir une alimentation électrique, par exemple en 1 2 V, pour alimenter les diodes électroluminescentes 220.

Par ailleurs, le bloc 201 diffère du bloc 1, car chaque plaque secondaire 212 a une épaisseur sensiblement inférieure à l'épaisseur d'une plaque primaire respective 211

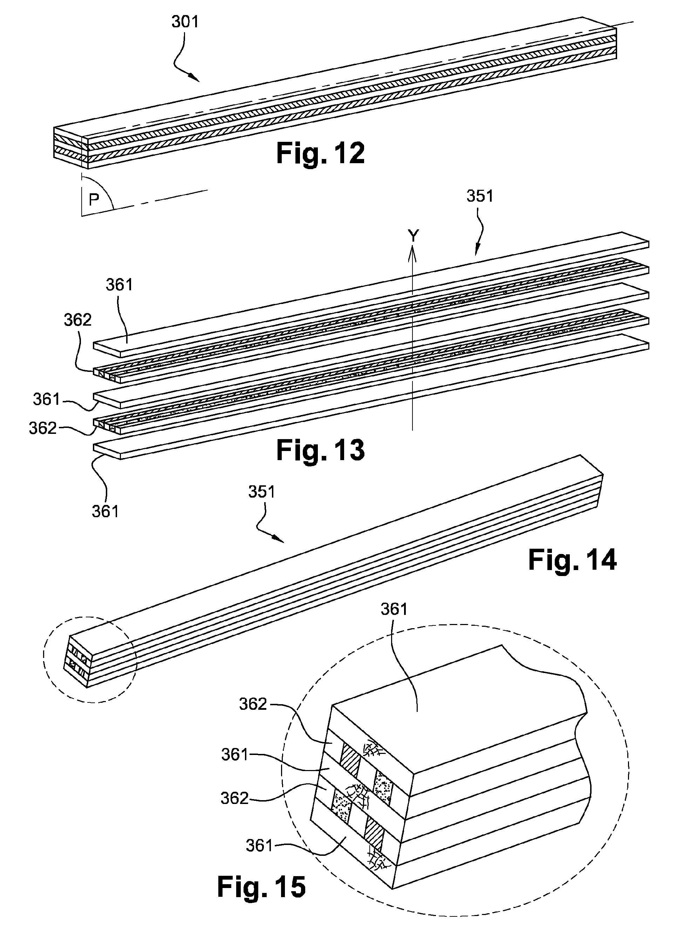

La figure 12 illustre un bloc 301 conforme à un troisième mode de réalisation de l'invention et à l'état assemblé. Dans la mesure où le bloc 301 est similaire au bloc 101, la description du bloc 101 donnée ci-avant en relation avec la figure 5 peut être transposée au bloc 301, à l'exception de la différence notable suivante : Les plaques primaires appartenant au bloc 301 sont monoblocs ou d'un seul tenant, alors que les plaques primaires 111 sont en bois recomposé à partir de planchettes aboutées.

Les figures 13 à 15 illustrent un ensemble 351 conforme à l'invention. L'ensemble 351 comprend plusieurs planches primaires 361 et plusieurs planches secondaires 362. Les planches primaires 361 et les planches secondaires 362 sont superposées, suivant un axe de superposition Y, et solidarisées par collage. En d'autres termes, dans l'ensemble 351, chaque planche secondaire est disposée entre deux planches primaires 361.

Les planches primaires 361 et les planches secondaires 362 sont qualifiées respectivement de « primaires » et « secondaires », car les planches primaires 361 sont d'un premier type et les planches secondaires 362 d'un deuxième type.

Comme le montrent les figures 13 et 14, chaque planche secondaire 362 est composée d'une alternance de portions de bois, qui forment les plaques primaires du bloc 301, et de portions en matériau plastique de synthèse, qui forment les plaques secondaires 12. En d'autres termes, chaque planche secondaire 362 est composée de bandes d'aspects distincts. Les planches primaires 361 sont formées à base de bois.

Comme le montre la figure 14, l'ensemble 351 présente à l'état assemblé une forme globalement parallélépipédique.

Chaque planche secondaire 362 est issue d'une découpe dans le bloc 301 suivant un plan de coupe P visible à la figure 1. Le plan de coupe P est plan de coupe orienté de sorte que la planche secondaire comprend des tronçons de plusieurs desdites plaques superposées. Dans l'exemple des figures 13 à 15, le plan de coupe P est parallèle à l'axe de superposition Y à la longueur du bloc 301.

Les matériaux respectifs des planches primaires 361 et des planches secondaires 362 sont sélectionnés de sorte que l'ensemble 351 est adapté pour être usiné de façon à réaliser au moins un objet industriel, tel qu'un composant de meuble, au moyen de machines d'usinage conventionnelles.

Les figures 16 et 17 illustrent respectivement des objets industriels 316 et 317 qui sont similaires aux objets industriels 3 et 4. Mais les objets industriels 316 et 317 sont issus d'un usinage réalisé dans l'ensemble 351, ce qui leur confère un aspect complexe particulier. En l'occurrence, les objets industriels 316 et 317 sont issus de tournage. Un alésage est réalisé dans l'objet industriel 316 pour loger par exemple une diode électroluminescente.

Selon d'autres caractéristiques avantageuses mais facultatives, prises isolément ou selon toute combinaison techniquement admissible :
- Les plaques ayant des dimensions équivalentes, mais pas nécessairement exactement identiques. Dans ce cas, leur superposition est approximative.
- Au lieu de marbre ou d'ardoise, un matériau minéral peut être un verre.

## Revendications

1. Bloc (1 ; 101 ; 201 ; 301), adapté pour être usiné de façon à réaliser au moins un objet industriel (3, 4 ; 106, 107, 108 ; 316, 317), tel qu'un composant de meuble, le bloc (1 ; 101 ; 201 ; 301) présentant de préférence une forme globalement parallélépipédique, le bloc (1 ; 101 ; 201 ; 301) comprenant plusieurs plaques superposées suivant une direction de superposition (Z) et solidarisées par collage, au moins deux plaques dites primaires (11 ; 111 ; 211) étant réalisées en des matériaux déterminés ;
le bloc (1 ; 101 ; 201 ; 301) étant caractérisé en ce qu"il comprend en outre au moins une plaque dite secondaire (12 ; 112 ; 212) disposée entre deux plaques primaires (11 ; 111 ; 211), le matériau d'une plaque secondaire (12; 112 ; 212) respective étant distinct du matériau respectif de chaque plaque primaire (11 ; 111 ; 211), de sorte que la ou chaque plaque secondaire (12 ; 112 ; 212) a un aspect distinct de l'aspect respectif de chaque plaque primaire (11 ; 111 ; 211), au moins une plaque secondaire (12 ; 112 ; 212) étant formée en un matériau sélectionné dans le groupe constitué d'un matériau plastique de synthèse, un métal, un matériau minéral tel qu'un marbre ou une ardoise, un cuir reconstitué et un matériau à base de cellulose compactée.

2. Bloc (1 ; 101 ; 201 ; 301) selon la revendication 1, comprenant plusieurs plaques secondaires (12 ; 112 ; 212) et dans lequel chaque plaque secondaire (12 ; 112 ; 212) présente une couleur distincte de la couleur respective de chaque plaque primaire (11 ; 111 ; 211).

3. Bloc (1 ; 101 ; 201 ; 301) selon la revendication 2, dans lequel les plaques secondaires (12; 112 ; 212) représentent entre 20% et 80% de la surface extérieure du bloc (1 ; 101 ; 201 ; 301).

4. Bloc (1 ; 101 ; 301) selon l'une des revendications 2 à 3, dans lequel les plaques primaires (11 ; 111) et les plaques secondaires (12 ; 112) sont superposées en alternance.

5. Bloc selon l'une des revendications précédentes, dans lequel au moins deux plaques primaires (11 ; 111 ; 211) sont formées à base de bois.

6. Bloc (101) selon l'une des revendications précédentes, dans lequel chaque plaque primaire (11 ; 111) et chaque plaque secondaire (12 ; 112) présente un état de surface adapté pour solidariser par collage ladite plaque primaire (11 ; 111) et ladite plaque secondaire (12 ; 112), par exemple au moyen d'une colle à base de polyuréthane thermofusible, telle qu'une colle réactive sans solvant ou une colle bi-composants.

7. Bloc (1 ; 101 ; 301) selon l'une des revendications précédentes, dans lequel au moins une plaque secondaire (12 ; 112) est formée en un matériau translucide, de préférence en une résine thermodurcissable.

8. Bloc (101) selon l'une des revendications précédentes, dans lequel au moins une plaque primaire (111) et/ou au moins une plaque secondaire est composée de planchettes aboutées.

9. Bloc (1 ; 101 ; 201 ; 301) selon l'une des revendications précédentes, dans lequel chacune desdites plaques primaires (11 ; 111 ; 211) et secondaires (12 ; 112 ; 212) a une dimension, dite épaisseur, qui est sensiblement inférieure aux deux autres dimensions, dites largeur et longueur, chaque plaque primaire (11 ; 111 ; 211) ou secondaire (12 ; 112 ; 212) ayant deux faces (11.1, 12.1 ; 111.1, 112.1) opposées globalement rectangulaires définies par la longueur et la largeur.

10. Bloc (1 ; 101 ; 201 ; 301) selon l'une des revendications précédentes, dans lequel l'épaisseur de la ou de chaque plaque secondaire (12 ; 112 ; 212) est comprise entre 30% et 200%, de préférence entre 80% et 120% de l'épaisseur moyenne des plaques primaires (11 ; 111 ; 211).

11. Bloc (201) selon l'une des revendications précédentes, comprenant au moins un conducteur électrique (215, 216) disposé entre deux desdites plaques primaires (211) et secondaires (212) et s'étendant entre deux extrémités du bloc (201), le conducteur électrique (215, 216) étant de préférence formé par un film recouvrant une face d'une plaque primaire (211) ou secondaire (212).

12. Ensemble (351), adapté pour être usiné de façon à réaliser au moins un objet industriel (316, 317), tel qu'un composant de meuble, l'ensemble (351) présentant de préférence une forme globalement parallélépipédique, l'ensemble (351) comprenant plusieurs planches superposées et solidarisées par collage, au moins deux planches dites primaires (361) étant réalisées en des matériaux déterminés ;
l'ensemble (351) étant caractérisé en ce qu"il comprend en outre au moins une planche dite secondaire (362) disposée entre deux planches primaires (361), au moins une planche secondaire (362) étant issue d'une découpe dans un bloc (1 ; 101 ; 201 ; 301) selon l'une des revendications précédentes et suivant un plan de coupe (P) orienté de sorte que la planche secondaire (362) comprend des tronçons de plusieurs desdites plaques primaires (11 ; 111 ; 211) et secondaires (12 ; 112 ; 212) superposées.

13. Ensemble (351) selon la revendication 12, dans lequel le bloc (1 ; 101 ; 201 ; 301) est selon l'une des revendications 9 à 11 et dans lequel le plan de coupe (P) est parallèle à la direction de superposition (Z).

14. Objet industriel (3, 4 ; 106, 107, 108 ; 316, 317), tel qu'un composant de meuble, issu d'un usinage réalisé dans un bloc (1 ; 101 ; 201 ; 301) selon l'une des revendications 1 à 11 ou dans un ensemble (351) selon l'une des revendications 12 à 13.
